# EUROPÄISCHE PATENTSCHRIFT

(11) **EP 0 544 112 B1**
(45) Veröffentlichungstag und Bekanntmachung des Hinweises auf die Patenterteilung: **25.01.1995**
(21) Anmeldenummer: 92118385.1
(22) Anmeldetag: 28.10.1992
(51) Int. Cl.: F16F 1/38, B60G 7/00

(54) **Gelenklager für die Lagerung von Lenkern in Kraftfahrzeugen**
Pivot bearing for suspension arms in a motor vehicle
Palier à articulation pour bras de suspension de véhicules à moteur

(30) Priorität: 23.11.1991 DE 4138582
(43) Veröffentlichungstag der Anmeldung: 02.06.1993
(73) Patentinhaber: LEMFOERDER METALLWAREN AG., D-49441 Lemförde (DE)
(72) Erfinder: Sprang, Ruediger, Dipl.-Ing., W-4514 Ostercappeln (DE); Vossel, Andreas, Dipl.-Ing., W-4500 Osnabrück (DE); Schmudde, Werner, Dipl.-Ing., W-4558 Bersenbrück (DE)
(74) Vertreter: Bruse, Willy Hans Heinrich

(56) Entgegenhaltungen:
- EP-A- 0 007 430
- EP-A- 0 033 362
- EP-A- 0 409 704
- DE-A- 2 434 501
- DE-A- 2 460 738
- DE-A- 2 520 947
- DE-U- 6 606 532
- FR-A- 1 224 726
- GB-A- 907 217
- Patent Abstracts of Japan vol. 10, no. 357 (M-540)(2414) 2.Dezember 1986 & JP-A-61 153 011(SAITAMA KIKI)

## Beschreibung

Die Erfindung betrifft ein Gelenklager für die Lagerung von Lenkern in Kraftfahrzeugen nach dem Oberbegriff des Patentanspruches 1.

Ein solches Gelenklager ist aus der DE 21 44 507 - C2 bekannt. Es ermöglicht radiale, axiale und kardanische Bewegungen des Innenteils gegenüber dem Gehäuse durch molekulare Verformungen eines Gummikörpers. Dieser ist zwischen Blechringen angeordnet, mit denen er durch Vulkanisation verbunden ist. Der eine Blechring stützt sich in einem innen zylindrischen Gehäuse gegen eine Schulter ab und der andere Blechring wird bei der Lagermontage nach dem axialen Vorspannen des Gummikörpers durch einen Federring gesichert und gehalten, so daß durch die aus der axialen Verspannung des Gummikörpers herrührenden Kräfte eine reibschlüssige Haftung des Gummikörpers an der zylindrischen Mantelfläche des Gehäuses erreicht wird. Für große Lenkerbewegungen, wie sie insbesondere bei Dreieckslenkern in gasgefederten Fahrzeugen auftreten, sind solche Lager nicht geeignet, weil extreme Lenkerausschläge zu einer Überdehnung des Gummikörpers führen.

Der Gedanke, ein solches Gelenk mit den Wirkungen eines Molekulargelenks zu kombinieren, ist aus der DE 34 19 967 -A1- bekannt.

In den Figuren 3 und 4 des DE-GM 66 06 532 und dem zugehörigen Beschreibungsteil ist ein Gelenk offenbart, bei dem axial beidseitig Blechringe angeordnet sind, wobei das eigentliche Gummimetall-Kugelgelenk in eine Bohrung des äußeren Gehäuses lose eingeführt und dann über die Blechringe axial verspannt ist, so daß der Elastomerkörper gegen den Innenmantel der Gehäusebohrung gedrückt wird, aber bei der Überschreitung eines bestimmten Torsionsmoments durchrutschen kann. Dies ist jedoch nur als eine Art Bruchsicherung anzusehen.

Aus der GB 1 078 641 ist ein Drehgleitlager bekannt, bei dem ein Gummikörper spannungsfrei auf einem Innenteil befestigt und drehbeweglich in einem zylindrischen Gehäuse gelagert ist. Ein solches Lager ist jedoch axial wenig belastbar.

Die FR 1 407 673 offenbart ein Drehgleitlager, bei dem das Innenteil elliptisch ausgebildet ist, so daß der Gummikörper auf diesem elliptischen Teil gleitend beweglich ist und mit zunehmender Auslenkung des Innenteils gegenüber dem Gehäuse, in dem der Gummikörper festgelegt ist, Rückstellkräfte aufgebaut werden. Ein solches Gelenklager kompensiert auch nur radiale Bewegungen des Innenteils und des Gehäuses relativ zueinander durch Molekularverformung des Gummikörpers.

Schließlich ist aus der DE 37 15 360 - C2 ein Molekulargelenk der Gattung nach dem Oberbegriff des Anspruches 1 bekannt, bei dem an der Innenfläche des innen zylindrischen Gehäuses in einer mittleren Zone Materialausnehmungen vorgesehen sind, die die Vorspannung eines Elastomerkörpers in diesem Bereich reduzieren, um bei steigender Belastung eine sich progressiv ändernde Federkennung zu erreichen.

Davon abweichend ist es Aufgabe der Erfindung, unter Beibehaltung aller Vorteile eines Molekulargelenks der eingangs genannten Gattung, bei hoher radialer und axialer Kraftaufnahme und dafür geeigneter Federsteifigkeit des Elastomerkörpers auch unter kardanischen Auslenkungen bewußt eine Torsionsbewegung mit großen Verdrehwinkeln und einem niedrigen Drehmoment zu ermöglichen.

Die Erfindung löst diese Aufgabe durch eine Kombination von Ausbildungsmerkmalen nach dem Patentanspruch 1.

Ein wesentliches Merkmal der Erfindung ist die Kombination eines Molekulargelenks mit einem unter Betriebsbedingungen drehbeweglichen Gelenk. Im Gegensatz zu bekannten Ausführungen, bei denen das Innenteil und das Gehäuse durch den Elastomerkörper miteinander verbunden sind und ein Durchrutschen der miteinander verbundenen Lagerteile allenfalls unter Überlastbedingungen vorgesehen ist, ermöglicht das erfindungsgemäß ausgebildete Gelenk eine Torsionsbewegung mit einem niedrigen Drehmoment und kann trotzdem hohe radiale und axiale Belastungen aufnehmen.

Der Elastomerkörper weist im vormontierten, also axial spannungsfreien Zustand mittig umlaufend eine ballige und beidseitig daneben eine umlaufend taillierte Mantelflächengeometrie auf, so daß sich unter der axialen Vorspannung im montierten Zustand des Gelenklagers eine etwa zylindrische Außenkontur des Elastomerkörpers ergibt. Unter Berücksichtigung der betrieblichen Anforderungen an das Gelenklager kann die sich unter der axialen Vorspannung des Elastomerkörpers einstellende zylindrische Außenkontur ein leichtes Über-, Null- oder Untermaß aufweisen, so daß ein Durchrutschen mit oder ohne Losbrechmoment erreicht werden kann. Zur Erhöhung der Dauerbelastbarkeit können zusätzlich Gleitmittel zwischen der Außenfläche des Elastomerkörpers und dem Innenmantel des Gehäuses eingesetzt werden. Aufgrund der Inkompressibilität und der daraus resultierenden Volumenkonstanz des elastomeren Werkstoffes sowie die aber die Länge in radialer Richtung unterschiedliche Querdehnungsbehinderung ergibt sich die Kontur des Elastomerkörpers im spannungsfreien Zustand für Lager mit kugelförmigem Innenteil aus dem geometrischen Verhältnis von Taillen- und Bauchdurchmesser des balligen Bereichs und des Taillenabstandes zur Gesamtausgangslänge des Elastomerkörpers.

Eine Besonderheit der Erfindung besteht darin, daß der axial zwischen festhaftend mit ihm verbundenen Blechringen angeordnete Elastomerkörper im eingebauten Zustand unter axialer Vorspannung eine leicht ballige rotationssymmetrische Außenkontur aufweist, deren größter Durchmesser etwa dem Innendurchmesser des zylindrischen Gehäuses entspricht, so daß die danebenliegenden Bereiche die Innenfläche des Gehäuses nicht berühren.

Ausführungsbeispiele der erfindungsgemäßen Ausbildung sind auf der Zeichnung dargestellt. Es zeigen:
- Figur 1: einen Längsschnitt durch einen auf einem Kugelkörper festhaftend angeordneten Elastomerkörper,
- Figur 2: den gleichen Längsschnitt durch einen auf einer Innenbuchse festhaftend angeordneten Elastomerkörper,
- Figur 3: einen Längsschnitt entsprechend Figur 1 durch ein montiertes Gelenklager,
- Figur 4: einen Längsschnitt entsprechend Figur 3 einer abgeänderten Ausbildung und
- Figur 5: eine Darstellung entsprechend Figur 1 in einem leicht vergrößerten Maßstab.

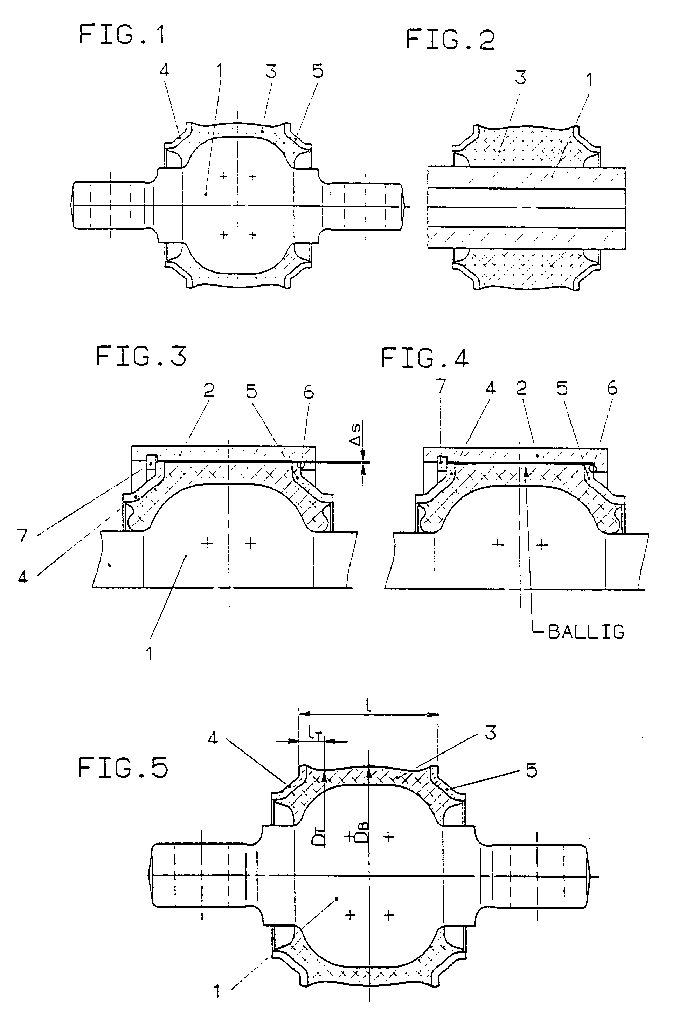

Das Gelenklager besteht entsprechend der Darstellung in den Figuren 3 und 4 aus einem Innenteil 1, einem Gehäuse 2 und einem dazwischen angeordneten Elastomerkörper 3. Die Figuren 1, 3, 4 und 5 zeigen Ausführungsbeispiele mit einem kugelförmigen Innenteil 1, welches an beiden Enden Befestigungszapfen zur Verbindung mit einem Kraftfahrzeugteil aufweist. Die Figur 2 zeigt ein Ausführungsbeispiel mit einem rohrförmigen Innenteil 1. Der Elastomerkörper 3 ist auf dem Innenteil 1 festhaftend angeordnet, mit diesem zum Beispiel durch Vulkanisation verbunden. An den Stirnseiten des Elastomerkörpers 3 befinden sich Blechringe 4 und 5, die ebenfalls durch Vulkanisation mit dem Elastomerkörper 3 fest verbunden sind. Die aus der Zeichnung hervorgehende Querschnittskontur der Blechringe 4 und 5 ist bekannt und nicht Gegenstand der Erfindung. Der Außendurchmesser der Blechringe 4 und 5 besitzt jedoch gegenüber dem Innendurchmesser des zylindrischen Teils des Gehäuses 2 ein Untermaß, so daß die Blechringe 4 und 5 in dem Gehäuse 2 axial und in Drehrichtung beweglich sind. Der Elastomerkörper 3 weist im vormontierten, das heißt spannungsfreien Zustand die aus den Figuren 1, 2 und 5 ersichtliche Geometrie auf. Rotationssymmetrisch ist der mittlere Bereich umlaufend ballig, und beidseitig daneben befindet sich ebenfalls umlaufend eine taillenförmige Durchmesserverringerung in der Weise, daß sich bei einer vorbestimmten axialen Verspannung des Elastomerkörpers 3 eine etwa zylindrische Mantelfläche am Außenumfang des Elastomerkörpers 3 ergibt. Im montierten Zustand des Gelenklagers stützt sich der eine Blechring 5 gegen eine innere Schulter 6 am Gehäuse 2 ab. Der andere Blechring 4 wird durch einen Federring 7 gesichert und gehalten, nachdem der Elastomerkörper 3 bei der Montage des Gelenklagers in axialer Richtung soweit Zusammengedrückt wurde, daß der Federring 7 in eine dafür am Innenumfang des Gehäuses 2 vorgesehene Nut eingesetzt werden kann. Aus der Darstellung in der Figur 3 ergibt sich, daß der nunmehr zylindrische Außenumfang des Elastomerkörpers 3 gegenüber dem Innenumfang des Gehäuses 2 ein leichtes Über-, ein Null- oder ein leichtes Untermaß aufweisen kann, so daß ein Durchrutschen, das heißt eine Drehbewegung des Elastomerkörpers 3 gegenüber dem Gehäuse 2 mit oder ohne Losbrechmoment erfolgen kann. In der Figur 4 ist ersichtlich, daß die Mantelfläche des Elastomerkörpers unter der axialen Vorspannung im Elastomerkörper auch eine leicht ballige Kontur aufweisen kann, so daß der mittlere Bereich sich gegen den Innenmantel des Gehäuses 2 abstützt und die Endbereiche nicht an der Gehäusewandung anliegen. Die Bestimmung der Geometrie des Elastomerkörpers im vorbestimmten Zustand ist dem Fachmann mit seinen ihm beruflich gegebenen Kenntnissen aus dem geometrischen Verhältnis von Taillendurchmesser DT und Durchmesser DB des bauchigen Mittelbereichs sowie dem Taillenabstand LT vom Nullpunkt der Ausgangslänge möglich.

### BEZUGSZEICHENLISTE:

- 1: Innenteil
- 2: Gehäuse
- 3: Elastomerkörper
- 4: Blechring
- 5: Blechring
- 6: Schulter
- 7: Federring

## Patentansprüche

1. Gelenklager für die Lagerung von Lenkern in Kraftfahrzeugen, bestehend aus einem metallischen Gehäuse (2) mit zylindrischem Innenmantel, einem metallischen Innenteil (1) und einem zwischen beiden angeordneten Elastomerkörper (3), welcher axiale, radiale und kardanische Bewegungen des Gehäuses und des Innenteils relativ zueinander durch molekulare Verformung kompensiert, wobei der radial nach außen mit dem zylindrischen Innenmantel des Gehäuses (2) zusammenwirkende Elastomerkörper (3) auf dem Innenteil haftend angeordnet und axial zwischen Blechringen (4,5) vorgespannt ist, dadurch gekennzeichnet, daß der Elastomerkörper (3) im vormontierten, axial spannungsfreien Zustand mittig umlaufend eine ballige und beidseitig daneben eine umlaufend taillierte Mantelflächengeometrie aufweist, die Blechringe (4,5) im Außendurchmesser ein Untermaß gegenüber dem Innendurchmesser des Innenmantels des Gehäuses (2) aufweisen und eine unter der axialen Verspannung sich ergebende, mit der zylindrischen Innenmantelfläche des Gehäuses zusammenwirkende Gleitfläche am Umfang des Elastomerkörpers (3) eine Drehbewegung des Innenteils im Gehäuse zuläßt.

2. Gelenklager nach Anspruch 1, dadurch gekennzeichnet, daß der axial zwischen den festhaftend mit ihm verbundenen Blechringen (4,5) angeordnete Elastomerkörper (3) im eingebauten Zustand unter axialer Vorspannung eine leicht ballige rotationssymmetrische Außenkontur aufweist, deren größter Durchmesser etwa dem Innendurchmesser des zylindrischen Gehäuses (2) entspricht.

3. Gelenklager nach den Ansprüchen 1 und 2, dadurch gekennzeichnet, daß sich unter der axialen Vorspannung im montierten Zustand eine etwa zylindrische Außenkontur des Elastomerkörpers (3) ergibt.

## Claims

1. Articulated bearing for supporting guide levers in motor vehicles, comprising a metal housing (2) with a cylindrical inner shell, a metal inner part (1) and, disposed between said two parts, an elastomer element (3) which by molecular deformation compensates axial, radial and cardanic movements of the housing and of the inner part relative to one another, the elastomer element (3) which in a radially outward direction cooperates with the cylindrical inner shell of the housing (2) being adhesively disposed on the inner part and being axially prestressed between circular laminations (4, 5), characterized in that the elastomer element (3) in its preassembled, axially unstressed state has a lateral surface geometry which at the middle circumference is crowned and at the adjacent circumference on either side is waisted, the circular laminations (4, 5) in their outside diameter have an undersize relative to the inside diameter of the inner shell of the housing (2), and a sliding surface on the periphery of the elastomer element (3), which arises under the axial bracing and cooperates with the cylindrical inner surface area of the housing, allows a rotational movement of the inner part in the housing.

2. Articulated bearing according to claim 1, characterized in that the elastomer element (3) disposed axially between the circular laminations (4, 5) adhesively connected thereto has, in its installed state under axial prestressing, a slightly crowned, rotationally symmetrical external contour, the maximum diameter of which corresponds approximately to the inside diameter of the cylindrical housing (2).

3. Articulated bearing according to claims 1 and 2, characterized in that under the axial prestressing in the assembled state an approximately cylindrical external contour of the elastomer element (3) arises.

## Revendications

1. Joint d'articulation, permettant le montage à palier des bras de suspension dans les véhicules automobiles, constitué d'un boîtier métallique (2), comportant une surface périphérique intérieure cylindrique, une partie intérieure métallique (1) et, disposé entre les deux, un corps en élastomère (3) qui compense des déplacements axiaux, radiaux et à la Cardan du boîtier et de la partie intérieure l'un vis-à-vis de l'autre moyennant une déformation moléculaire,, tandis que le corps en élastomère (3), qui coopère radialement vers l'extérieur avec la surface périphérique intérieure cylindrique du boîtier (2), est disposé de manière à adhérer sur la partie intérieure et est axialement soumis à une précontrainte entre des anneaux en tôle (4, 5), caractérisé en ce qu'à l'état préassemblé, sans contrainte axiale, le corps en élastomère (3) comporte, en son milieu et sur tout son pourtour, une forme géométrique bombée et, sur le côté et de part et d'autre, une forme géométrique de surface périphérique qui est plus mince et en fait tout le tour, en ce que les anneaux en tôle (4, 5) présentent, en diamètre extérieur, une dimension inférieure à la cote prescrite en comparaison du diamètre intérieur de la surface périphérique intérieure du boîtier (2) et en ce qu'une surface de glissement, qui est située sur la surface périphérique du corps en élastomère (3) et qui se forme sous l'effet de la précontrainte axiale et coopère avec la surface périphérique intérieure cylindrique du boîtier, autorise un déplacement en rotation de la partie intérieure dans le boîtier.

2. Joint d'articulation selon la revendication 1, caractérisé en ce qu'à l'état monté, sous une précontrainte axiale, le corps en élastomère (3), disposé axialement entre les anneaux en tôle (4, 5) qui lui sont reliés de manière adhérer, possède un contour extérieur de révolution légèrement bombé dont le plus grand diamètre est pratiquement égal au diamètre intérieur du boîtier cylindrique (2).

3. Joint d'articulation selon les revendications 1 et 2, caractérisé en ce que, sous la précontrainte axiale à l'état monté, il se forme un contour extérieur cylindrique du corps en élastomère (3).
